(19) Europäisches Patentamt
European Patent Office
Office européen des brevets

(11) **EP 4 346 213 A1**

(12) **EUROPEAN PATENT APPLICATION**

(43) Date of publication:
**03.04.2024  Bulletin 2024/14**

(21) Application number: **23150460.6**

(22) Date of filing: **05.01.2023**

(51) International Patent Classification (IPC):
*H04N 19/59* (2014.01)   *H04N 19/70* (2014.01)
*H04N 19/117* (2014.01)   *H04N 19/186* (2014.01)

(52) Cooperative Patent Classification (CPC):
**H04N 19/70; H04N 19/117; H04N 19/186;**
**H04N 19/59**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022  JP 2022153692**

(71) Applicant: **SHARP Kabushiki Kaisha
Sakai-City
Osaka 590-8522 (JP)**

(72) Inventors:
• **CHUJOH, Takeshi
Sakai City, Osaka 590-8522 (JP)**

• **IKAI, Tomohiro
Sakai City, Osaka 590-8522 (JP)**
• **YASUGI, Yukinobu
Sakai City, Osaka 590-8522 (JP)**
• **TOKUMO, Yasuaki
Sakai City, Osaka 590-8522 (JP)**
• **AONO, Tomoko
Sakai City, Osaka 590-8522 (JP)**
• **TAKADA, Keiichiro
Sakai City, Osaka 590-8522 (JP)**

(74) Representative: **Müller Hoffmann & Partner
Patentanwälte mbB
St.-Martin-Straße 58
81541 München (DE)**

(54) **VIDEO CODING APPARATUS AND VIDEO DECODING APPARATUS**

(57)    Object
In the existing specifications for neural network post-filter characteristics SEI, in order to perform post-filtering processing, the SEI needs to be transmitted for each picture, which presents a problem of redundancy in a case that the same post-filtering processing is performed in all of pictures.
Solution
A video decoding apparatus according to an aspect of the present invention includes an image decoding apparatus configured to decode coded data and generate a decoded image, an inverse conversion information decoding apparatus configured to decode inverse conversion information as supplemental enhancement information on a per sequence basis, and a resolution inverse conversion apparatus configured to conversion the decoded image to an image with an indicated resolution by using the inverse conversion information, the resolution inverse conversion apparatus using a neural network. The video decoding apparatus decodes information as to whether to apply resolution inverse conversion processing using the inverse conversion information on a per sequence basis or on a per picture basis.

FIG. 1

Processed by Luminess, 75001 PARIS (FR)

**Description**

Technical Field

Embodiments of the present invention relate to a video coding apparatus and a video decoding apparatus.

Background Art

A video coding apparatus which generates coded data by coding a video, and a video decoding apparatus which generates decoded images by decoding the coded data are used for efficient transmission or recording of videos.
Specific video coding schemes include, for example, H.264/AVC, an H.265/High-Efficiency Video Coding (HEVC) and H.266/Versatile Video Coding (VVC) scheme, and the like.
In such a video coding scheme, images (pictures) constituting a video are managed in a hierarchical structure including slices obtained by splitting an image, coding tree units (CTUs) obtained by splitting a slice, units of coding (which may also be referred to as coding units (CUs)) obtained by splitting a coding tree unit, and transform units (TUs) obtained by splitting a coding unit, and are coded/decoded for each CU.
In such a video coding scheme, usually, a prediction image is generated based on a local decoded image that is obtained by coding/decoding an input image (a source image), and prediction errors (which may be referred to also as "difference images" or "residual images") obtained by subtracting the prediction image from the input image are coded. Generation methods of prediction images include an inter-picture prediction (inter prediction) and an intra-picture prediction (intra prediction).
H.274 defines Supplemental Enhancement Information SEI messages for simultaneously transmitting characteristics, a display method, timing, and the like of an image together with coded data.
NPL 1 discloses the SEI for transmitting topology and parameters of a neural network filter used as a post-filter in a randomly accessible unit. NPL 1 discloses the SEI for transmitting, for each picture, whether to perform post-filtering processing.

Citation List

Non Patent Literature

NPL 1
S. McCarthy, T. Chujoh, M. M. Hannuksela, G. J. Sullivan and Y.-K.Wang, "Additional SEI messages for VSEI (Draft 1)," JVET-AA2006-v2, Aug. 19, 2022.

Summary of Invention

Technical Problem

However, in the method disclosed in NPL 1, in order to perform the post-filtering processing, the SEI needs to be transmitted for each picture, which presents a problem of redundancy in a case that the same post-filtering processing is performed in all of pictures.

Solution to Problem

A video decoding apparatus according to an aspect of the present invention includes an image decoding apparatus configured to decode coded data and generate a decoded image, an inverse conversion information decoding apparatus configured to decode inverse conversion information as supplemental enhancement information on a per sequence basis, and a resolution inverse conversion apparatus configured to conversion the decoded image to an image with an indicated resolution by using the inverse conversion information, the resolution inverse conversion apparatus using a neural network. The video decoding apparatus decodes information as to whether to apply resolution inverse conversion processing using the inverse conversion information on a per sequence basis or on a per picture basis.
A video decoding apparatus according to an aspect of the present invention includes an image decoding apparatus configured to decode coded data and generate a decoded image, an inverse conversion information decoding apparatus configured to decode inverse conversion information as supplemental enhancement information on a per sequence basis, and a resolution inverse conversion apparatus configured to conversion the decoded image to an image with an indicated resolution by using the inverse conversion information, the resolution inverse conversion apparatus using a neural network. The video decoding apparatus decodes information as to whether to apply resolution inverse conversion processing using the inverse conversion information on a per layer basis.

A video coding apparatus according to an aspect of the present invention includes an image coding apparatus configured to code an image and generate coded data, an inverse conversion information generation apparatus configured to generate inverse conversion information for inversely converting resolution of a decoded image resulting from decoding the coded data, and an inverse conversion information coding apparatus configured to code the inverse conversion information as supplemental enhancement information on a per sequence basis. The video coding apparatus codes information as to whether to apply resolution inverse conversion processing using the inverse conversion information on a per sequence basis or on a per picture basis.

A video coding apparatus according to an aspect of the present invention includes an image coding apparatus configured to code an image and generate coded data, an inverse conversion information generation apparatus configured to generate inverse conversion information for inversely converting resolution of a decoded image resulting from decoding the coded data, and an inverse conversion information coding apparatus configured to code the inverse conversion information as supplemental enhancement information on a per sequence basis. The video coding apparatus codes information as to whether to apply resolution inverse conversion processing using the inverse conversion information on a per layer basis.

Advantageous Effects of Invention

Such a configuration can solve the problem that there may be redundancy in a case of performing the post-filtering processing.

Brief Description of Drawings

FIG. 1 is a schematic diagram illustrating a configuration of a video transmission system according to the present embodiment.
FIG. 2 is a diagram illustrating a hierarchical structure of coded data.
FIG. 3 is a conceptual diagram of an image to be processed in the video transmission system according to the present embodiment.
FIG. 4 is a conceptual diagram illustrating an example of reference pictures and reference picture lists.
FIG. 5 is a schematic diagram illustrating a configuration of an image decoding apparatus.
FIG. 6 is a flowchart illustrating general operation of the image decoding apparatus.
FIG. 7 is a block diagram illustrating a configuration of an image coding apparatus.
FIG. 8 is a diagram illustrating neural network post-filter characteristics SEI syntax according to the present embodiment.
FIG. 9 is a diagram illustrating neural network post-filter characteristics SEI syntax according to another embodiment.
FIG. 10 is a diagram illustrating neural network post-filter activation SEI syntax.
FIG. 11 is a diagram illustrating syntax of an SEI payload being a container of an SEI message.
FIG. 12 is a diagram illustrating a flowchart of processing of an NN filter unit 611.
FIG. 13 is a diagram illustrating a configuration of a neural network of the NN filter unit 611.
FIG. 14 is a diagram illustrating a coding apparatus and a decoding apparatus of NNR.

Description of Embodiments

First Embodiment

Hereinafter, an embodiment of the present invention will be described with reference to the drawings.

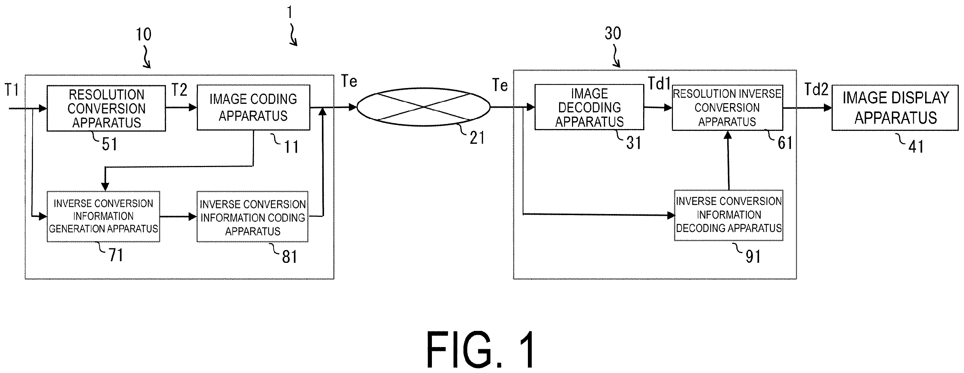

FIG. 1 is a schematic diagram illustrating a configuration of a video transmission system according to the present embodiment.

A video transmission system 1 is a system for transmitting coded data in which an image of different resolution converted in resolution is coded, decoding the coded data transmitted, and inversely converting the coded data decoded into the image with the original resolution for display. The video transmission system 1 includes a video coding apparatus 10, a network 21, a video decoding apparatus 30, and an image display apparatus 41.

The video coding apparatus 10 includes a resolution conversion apparatus (resolution converter) 51, an image coding apparatus (image coder) 11, an inverse conversion information generation apparatus (inverse conversion information generation unit) 71, and an inverse conversion information coding apparatus (inverse conversion information coder) 81.

The video decoding apparatus 30 includes an image decoding apparatus (image decoder) 31, a resolution inverse conversion apparatus (resolution inverse converter) 61, and an inverse conversion information decoding apparatus (inverse conversion information decoder) 91.

The resolution conversion apparatus 51 converts the resolution of an image T1 included in a video, and supplies a variable resolution video T2 including the image with a different resolution to the image coding apparatus 11. The resolution conversion apparatus 51 supplies, to the image coding apparatus 11, inverse conversion information indicating the presence or absence of resolution conversion of the image. In a case that the information indicates resolution conversion, the image coding apparatus 11 sets resolution conversion information ref_pic_resampling_enabled_flag to be described later equal to 1, and includes the information in a sequence parameter set SPS of coded data Te for coding.

The inverse conversion information generation apparatus 71 generates the inverse conversion information, based on the image T1 included in the video. The inverse conversion information is derived or selected from a relationship between the input image T1 before being subjected to resolution conversion and an image Td1 after being subjected to resolution conversion, coding, and decoding.

The inverse conversion information is input to the inverse conversion information coding apparatus 81. The inverse conversion information coding apparatus 81 codes the inverse conversion information, generates coded inverse conversion information, and transmits the coded inverse conversion information to the network 21.

The variable resolution image T2 is input to the image coding apparatus 11. With use of a framework of Reference Picture Resampling (RPR), the image coding apparatus 11 codes image size information of an input image for each PPS, and transmits the coded image size information to the image decoding apparatus 31.

In FIG. 1, although the inverse conversion information coding apparatus 81 is not connected with the image coding apparatus 11, the inverse conversion information coding apparatus 81 and the image coding apparatus 11 may communicate necessary information as appropriate.

The network 21 transmits the coded inverse conversion information and the coded data Te to the image decoding apparatus 31. A part or all of the coded inverse conversion information may be included in the coded data Te as supplemental enhancement information SEI. The network 21 is the Internet, a Wide Area Network (WAN), a Local Area Network (LAN), or a combination thereof. The network 21 is not necessarily limited to a bi-directional communication network, and may be a uni-directional communication network configured to transmit broadcast waves of digital terrestrial television broadcasting, satellite broadcasting of the like. The network 21 may be substituted by a storage medium in which the coded data Te is recorded, such as a Digital Versatile Disc (DVD: trade name) or a Blue-ray Disc (BD: trade name).

The image decoding apparatus 31 decodes the coded data Te transmitted by the network 21 and generates and supplies a variable resolution decoded image Td1 to the resolution inverse conversion apparatus 61.

The inverse conversion information decoding apparatus 91 decodes the coded inverse conversion information transmitted by the network 21 and generates and supplies the inverse conversion information to the resolution inverse conversion apparatus 61.

In FIG. 1, the inverse conversion information decoding apparatus 91 is illustrated separately from the image decoding apparatus 31, however, the inverse conversion information decoding apparatus 91 may be included in the image decoding apparatus 31. For example, the inverse conversion information decoding apparatus 91 may be included in the image decoding apparatus 31 separately from each function unit of the image decoding apparatus 31. In FIG. 1, although there is no connection with the image decoding apparatus 31, the inverse conversion information decoding apparatus 91 and the image decoding apparatus 31 may communicate necessary information as appropriate.

In a case that the resolution conversion information indicates resolution conversion, the resolution inverse conversion apparatus 61 inversely converts the decoded image of the image decoding apparatus 31 into an image having converted resolution, based on the coded data and the image size information included in the inverse conversion information. Examples of a method of inversely converting the image obtained by converting the resolution include post-filtering processing such as super-resolution processing using a neural network and the like.

In a case that the resolution conversion information indicates resolution of an actual size, the resolution inverse conversion apparatus 61 may perform post-filtering processing using a neural network, perform resolution inverse conversion processing of reconstructing the input image T1, and generate a decoded image Td2.

Note that, here, the resolution conversion and the resolution inverse conversion include not only a change in an image size but also conversion of a chroma signal format, that is, conversion of 4 : 2 : 0, 4 : 2 : 2, and 4 : 4 : 4, and the like. The similar discussion may apply to conversion and inverse conversion with the image size being an actual size.

The image display apparatus 41 displays all or a part of one or multiple decoded images Td2 input from the resolution inverse conversion apparatus 61. For example, the image display apparatus 41 includes a display device such as a liquid crystal display and an organic Electro-Luminescence (EL) display. Forms of the display include a stationary type, a mobile type, an HMD type, and the like. In a case that the image decoding apparatus 31 has a high processing capability, an image having high image quality is displayed. In a case that the image decoding apparatus 31 has only a lower processing capability, an image which does not require high processing capability and display capability is displayed.

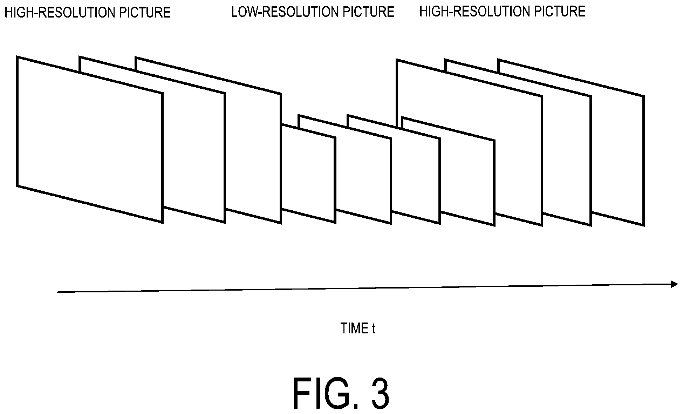

FIG. 3 is a conceptual diagram of an image to be processed in the video transmission system illustrated in FIG. 1, and is a diagram illustrating a change in resolution of the image over time. Note that, FIG. 3 does not distinguish whether the image is coded. FIG. 3 illustrates an example in which, during the processing process of the video transmission system, an image with the resolution reduced is transmitted to the image decoding apparatus 31. As illustrated in FIG. 3, typically, the resolution conversion apparatus 51 performs conversion for making resolution of an image equal to or lower than resolution of an input image to decrease the amount of information to be transmitted.

Operator

Operators used in the present specification will be described below.

» is a right bit shift, << is a left bit shift, & is a bitwise AND, | is a bitwise OR, |= is an OR assignment operator, and ‖ indicates a logical sum.

x ? y : z is a ternary operator that takes y in a case that x is true (other than 0) and takes z in a case that x is false (0). Clip3(a, b, c) is a function to clip c in a value of a to b, and a function to return a in a case that c is less than a (c < a), return b in a case that c is greater than b (c > b), and return c in the other cases (provided that a is less than or equal to b (a <= b)).

abs (a) is a function that returns the absolute value of a.

Int (a) is a function that returns the integer value of a.

floor (a) is a function that returns the maximum integer equal to or less than a.

ceil (a) is a function that returns the minimum integer equal to or greater than a.

a/d represents division of a by d (round down decimal places).

a ^ b represents power(a, b). In a case that a = 2, 1 << b.

Structure of Coded Data Te

Prior to the detailed description of the image coding apparatus 11 and the image decoding apparatus 31 according to the present embodiment, a data structure of the coded data Te generated by the image coding apparatus 11 and decoded by the image decoding apparatus 31 will be described.

The coded data Te includes multiple Coded Video Sequences (CVSs) and an End of Bitstream (EoB) NAL unit. Each CVS includes multiple Access Units (AUs) and an End of Sequence (EoS) NAL unit. The AU at the start of the CVS is referred to as a Coded Video Sequence Start (CVSS) AU. A unit obtained by splitting the CVS for each layer is referred to as a Coded Layer Video Sequence (CLVS). Each AU includes Picture Units (PUs) of one or multiple layers at the same output time. In a case that a Multilayer coding scheme is not adopted, the AU includes one PU. The PU is a unit of coded data of one decoded picture including multiple NAL units. The CLVS includes PUs of the same layer, and the PU at the start of the CLVS is referred to as a Coded Layer Video Sequence Start (CLVSS) PU. The CLVSS PU is limited to a PU with randomly accessible Intra Random Access Pictures (IRAP) or Gradual Decoder Refresh Picture (GDR). The NAL unit includes a NAL unit header and Raw Byte Sequence Payload (RBSP) data. The NAL unit header includes zero data of 2 bits, which is followed by nuh_layer_id of 6 bits indicating a layer value, nuh_unit_type of 5 bits indicating a NAL unit type, and nuh_temporal_id_plus1 of 3 bits being a value obtained by adding 1 to a Temporal ID value.

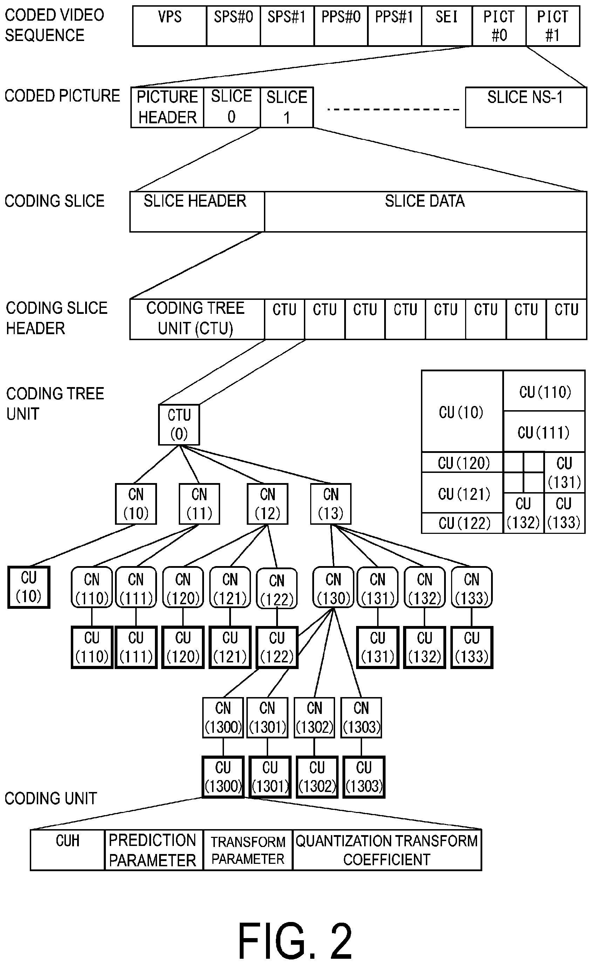

FIG. 2 is a diagram illustrating a hierarchical structure of data in the coded data Te for each PU. The coded data Te includes a sequence and multiple pictures constituting the sequence illustratively. FIG. 2 is a diagram illustrating a coded video sequence defining a sequence SEQ, a coded picture defining a picture PICT, a coding slice defining a slice S, a coding slice data defining slice data, a coding tree unit included in the coding slice data, and a coding unit included in the coding tree unit.

Coded Video Sequence

In the coded video sequence, a set of data referred to by the image decoding apparatus 31 to decode the sequence SEQ to be processed is defined. As illustrated in FIG. 2, the sequence SEQ includes a Video Parameter Set VPS, a Sequence Parameter Set SPS, a Picture Parameter Set PPS, an Adaptation Parameter Set (APS), a picture PICT, and Supplemental Enhancement Information SEI.

In the video parameter set VPS, in a video including multiple layers, a set of coding parameters common to multiple videos and a set of coding parameters associated with the multiple layers and an individual layer included in the video are defined.

In the sequence parameter set SPS, a set of coding parameters referred to by the image decoding apparatus 31 to decode a target sequence is defined. For example, a width and a height of a picture are defined. Note that multiple SPSs may exist. In that case, any of the multiple SPSs is selected from the PPS.

Here, the sequence parameter set SPS includes the following syntax elements.

- ref_pic_resampling_enabled_flag: A flag specifying whether to use a function of making the resolution variable (resampling) in a case of decoding images included in a single sequence referencing a target SPS. From another aspect, the flag indicates that the size of the reference picture referred to in the generation of the prediction image changes between the images indicated by the single sequence. In a case that the value of the flag is 1, the above resampling is applied, and in a case that the value is 0, the resampling is not applied.
- pic_width_max_in_luma_samples: A syntax element indicating, in units of luma blocks, the width of one of the images in a single sequence, the image having the largest width. The syntax element is required to have a value that is not 0 and that is an integer multiple of Max(8, MinCbSizeY). Here, MinCbSizeY is a value determined by the minimum size of the luma block.
- pic height max in luma_samples: A syntax element indicating, in units of luma blocks, the height of one of the images in a single sequence, the image having the largest height. The syntax element is required to have a value that is not 0 and that is an integer multiple of Max(8, MinCbSizeY).

In the picture parameter set PPS, a set of coding parameters referred to by the image decoding apparatus 31 to decode each picture in a target sequence is defined. Note that multiple PPSs may exist. In that case, any of the multiple PPSs is selected from each picture in a target sequence.

Here, the picture parameter set PPS includes the following syntax elements.

- pps_pic_width_in_luma_samples: A syntax element indicating the width of a target picture. The syntax element is required to have a value that is not 0, that is an integer multiple of Max(8, MinCbSizeY), and that is equal to or less than sps_pic_width_max_in_luma_samples.
- pps_pic_height_in_luma_samples: A syntax element indicating the height of the target picture. The syntax element is required to have a value that is not 0, that is an integer multiple of Max(8, MinCbSizeY), and that is equal to or less than sps_pic_height_max_in_luma_samples.
- pps_conformance_window_flag: A flag indicating whether a conformance (cropping) window offset parameter is subsequently signaled, the flag indicating a location where a conformance window is displayed. In a case that the flag is 1, it is indicated that the parameter is signaled, and in a case that the flag is 0, it is indicated that no conformance window offset parameter is present.
- pps_conf_win_left_offset, pps_conf_win_right_offset, pps_conf_win_top_offset, pps_conf_win_bottom_offset: An offset value indicating, for a rectangular region indicated in picture coordinates for output, the left, right, top, and bottom positions of a picture output in decoding processing. In a case that the value of pps_conformance_window_flag is 0, the values of pps_conf_win_left_offset, pps_conf_win_right_offset, pps_conf_win_top_offset, and pps_conf_win_bottom_offset are inferred to be 0.

Here, a variable ChromaFormatIdc of a chroma format is a value of sps_chroma_format_id, and a variable SubWidthC and a variable SubHightC are values determined by ChromaFormatIdc. In a case of a monochrome format, SubWidthC and SubHightC are both 1, in a case of a 4 : 2 : 0 format, SubWidthC and SubHightC are both 2, in a case of a 4 : 2 : 2 format, SubWidthC is 2 and SubHightC is 1, and in a case of a 4 : 4 : 4 format, SubWidthC and SubHightC are both 1. - pps_init_qp_minus26 is information for deriving a quantization parameter SliceQpY of a slice referred to in the PPS.

Sub-Picture

A picture may be further split into sub-pictures each having a rectangular shape. The size of each sub-picture may be a multiple of that of the CTU. The sub-picture is defined by a set of an integer number of vertically and horizontally continuous tiles. In other words, a picture is split into rectangular tiles, and a set of the rectangular tiles defines the sub-picture. The sub-picture may be defined using an ID of a top left tile and an ID of a bottom right tile of the sub-picture.

Coded Picture

In the coded picture, a set of data referred to by the image decoding apparatus 31 to decode the picture PICT to be processed is defined. As illustrated in FIG. 2, the picture PICT includes a picture header PH and slices 0 to NS-1 (NS is the total number of slices included in the picture PICT).

Information (ph_qp_delta) for deriving the quantization parameter SliceQpY updated at a picture level is further included.

$$SliceQpY = 26 + pps\_init\_qp\_minus26 + ph\_qp\_delta$$

In the description below, in a case that the slices 0 to NS-1 need not be distinguished from one another, subscripts of reference signs may be omitted. The same applies to other data with subscripts included in the coded data Te which will be described below.

Coding Slice

In the coding slice, a set of data referred to by the image decoding apparatus 31 to decode the slice S to be processed is defined. As illustrated in FIG. 2, the slice includes a slice header and slice data.
The slice header includes a coding parameter group referred to by the image decoding apparatus 31 to determine a decoding method for a target slice. Slice type indication information (slice_type) indicating a slice type is one example of a coding parameter included in the slice header.
Examples of slice types that can be indicated by the slice type indication information include (1) I slices for which only an intra prediction is used in coding, (2) P slices for which a uni-prediction (L0 prediction) or an intra prediction is used in coding, (3) B slices for which a uni-prediction (L0 prediction or L1 prediction), a bi-prediction, or an intra prediction is used in coding, and the like. Note that the inter prediction is not limited to the uni-prediction and the bi-prediction, and a prediction image may be generated by using a larger number of reference pictures. Hereinafter, in a case of being referred to as the P or B slice, a slice that includes a block in which the inter prediction can be used is indicated.
Information (sh_qp_delta) for deriving the quantization parameter SliceQpY updated at a slice level is further included.

$$SliceQpY = 26 + pps\_init\_qp\_minus26 + sh\_qp\_delta$$

Note that the slice header may include a reference to the picture parameter set PPS (pic_parameter_set_id).

Coding Slice Data

In the coding slice data, a set of data referred to by the image decoding apparatus 31 to decode the slice data to be processed is defined. The slice data includes CTUs as illustrated in the coding slice header in FIG. 2. The CTU is a block of a fixed size (for example, 64 x 64) constituting a slice, and may be referred to as a Largest Coding Unit (LCU).

Coding Tree Unit

In FIG. 2, a set of data referred to by the image decoding apparatus 31 to decode the CTU to be processed is defined. The CTU is split into coding units CU, each of which is a basic unit of coding processing, by a recursive Quad Tree split (QT split), Binary Tree split (BT split), or Ternary Tree split (TT split). The BT split and the TT split are collectively referred to as a Multi Tree split (MT split). Nodes of a tree structure obtained by recursive quad tree splits are referred to as Coding Nodes. Intermediate nodes of a quad tree, a binary tree, and a ternary tree are coding nodes, and the CTU itself is also defined as the highest coding node.

Coding Unit

In FIG. 2, a set of data referred to by the image decoding apparatus 31 to decode the coding unit to be processed is defined. Specifically, the CU includes a CU header CUH, a prediction parameter, a transform parameter, a quantization transform coefficient, and the like. In the CU header, a prediction mode and the like are defined.
There are cases that prediction processing is performed in units of CU or performed in units of sub-CU in which the CU is further split.
There are two types of predictions (prediction modes), which are intra prediction and inter prediction. The intra prediction refers to a prediction in an identical picture, and the inter prediction refers to prediction processing performed between different pictures (for example, between pictures of different display times, and between pictures of different layer images).
Transform and quantization processing is performed in units of CU, but the quantization transform coefficient may be subjected to entropy coding in units of subblock such as 4 x 4.

Prediction Parameter

A prediction image is derived by prediction parameters accompanying a block. The prediction parameters include prediction parameters for intra prediction and inter prediction.

The prediction parameters for inter prediction will be described below. The inter prediction parameters include prediction list utilization flags predFlagL0 and predFlagL1, reference picture indexes refIdxL0 and refIdxL1, and motion vectors mvL0 and mvL1. predFlagL0 and predFlagL 1 are flags indicating whether reference picture lists (L0 list and L1 list) are used, and in a case that the value of each of the flags is 1, a corresponding reference picture list is used. Note that, in a case that the present specification mentions "a flag indicating whether or not XX", a flag being other than 0 (for example, 1) assumes a case of XX, and a flag being 0 assumes a case of not XX, and 1 is treated as true and 0 is treated as false in a logical negation, a logical product, and the like (hereinafter, the same is applied). However, other values can be used for true values and false values in real apparatuses and methods.

Reference Picture List

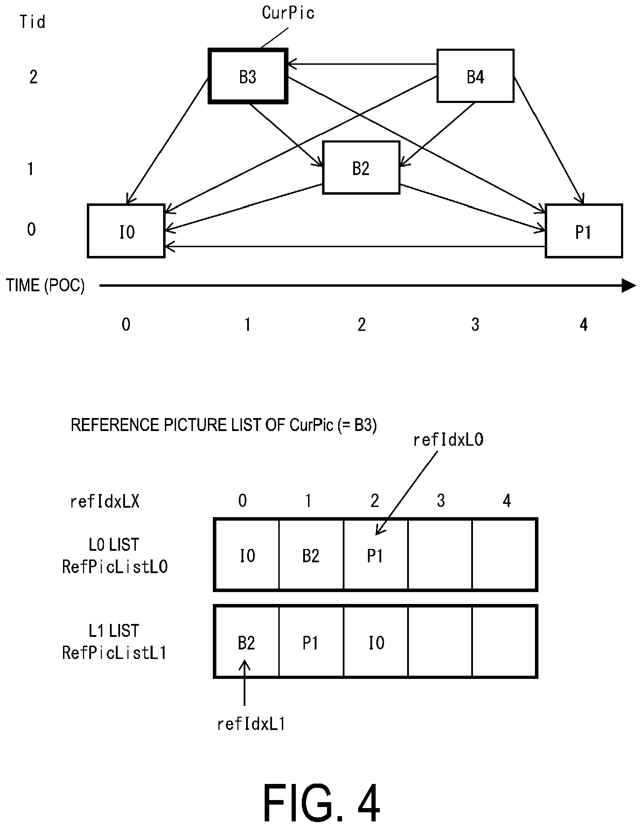

A reference picture list is a list including reference pictures stored in a reference picture memory 306. FIG. 4 is a conceptual diagram illustrating an example of reference pictures and reference picture lists. In FIG. 4 corresponding to a conceptual diagram illustrating an example of reference pictures, rectangles indicate pictures, arrows indicate reference relationships among the pictures, a horizontal axis indicates time, I, P, and B in the rectangles respectively indicate an intra-picture, a uni-prediction picture, and a bi-prediction picture, and numbers in the rectangles indicate a decoding order. Tid is a value of TemporalID representing depth of a layer, and is transmitted in the NAL unit header. As illustrated, the decoding order of the pictures is I0, P1, B2, B3, and B4, and the display order is I0, B3, B2, B4, and P1. FIG. 4 illustrates an example of the reference picture lists of the picture B3 (target picture). Each reference picture list is a list to represent candidates of a reference picture, and one picture (slice) may include one or more reference picture lists. In the illustrated example, the target picture B3 includes two reference picture lists, i.e., an L0 list RefPicList0 and an L1 list RefPicList1. For individual CUs, which picture in a reference picture list RefPicListX (X = 0 or 1) is actually referred to is indicated by refIdxLX. The diagram illustrates an example of refIdxL0 = 2 and refIdxL1 = 0. Note that LX is a description method used in a case that an L0 prediction and an L1 prediction are not distinguished, and in the following description, parameters for the L0 list and parameters for the L1 list are distinguished by replacing LX with L0 and L1.

Configuration of Image Decoding Apparatus

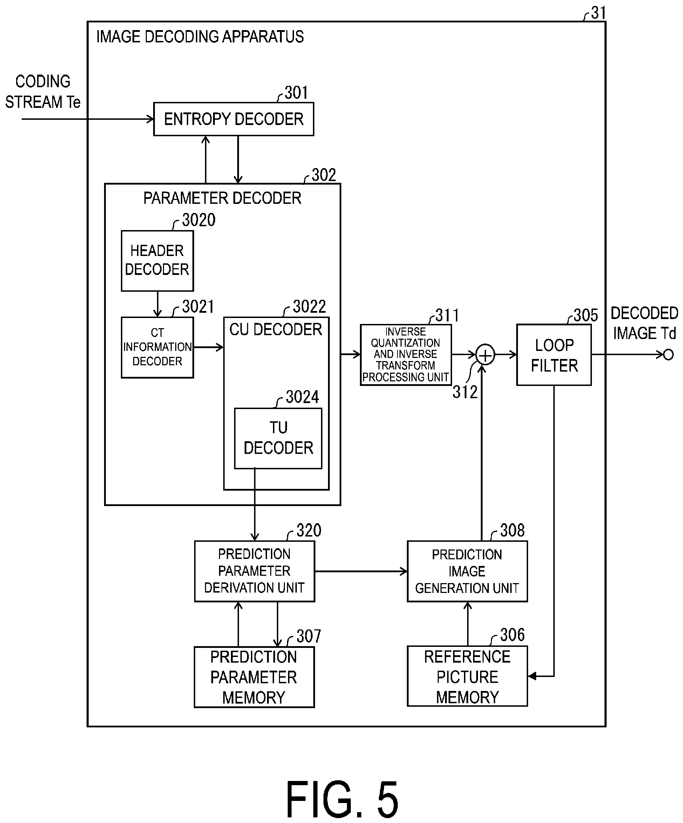

A configuration of the image decoding apparatus 31 (FIG. 5) according to the present embodiment will be described.

The image decoding apparatus 31 includes an entropy decoder 301, a parameter decoder (a prediction image decoding apparatus) 302, a loop filter 305, a reference picture memory 306, a prediction parameter memory 307, a prediction image generation unit (prediction image generation apparatus) 308, an inverse quantization and inverse transform processing unit 311, an addition unit 312, and a prediction parameter derivation unit 320. Note that a configuration in which the loop filter 305 is not included in the image decoding apparatus 31 may be used in accordance with the image coding apparatus 11 described later.

The parameter decoder 302 further includes a header decoder 3020, a CT information decoder 3021, and a CU decoder 3022 (prediction mode decoder), and the CU decoder 3022 further includes a TU decoder 3024. These may be collectively referred to as a decoding module. The header decoder 3020 decodes, from coded data, parameter set information such as the VPS, the SPS, the PPS, and the APS, and a slice header (slice information). The CT information decoder 3021 decodes a CT from coded data. The CU decoder 3022 decodes a CU from coded data.

In the mode other than a skip mode (skip_mode == 0), the TU decoder 3024 decodes QP update information and quantization prediction error from coded data.

The prediction image generation unit 308 includes an inter prediction image generation unit 309 and an intra prediction image generation unit 310.

The prediction parameter derivation unit 320 includes an inter prediction parameter derivation unit 303 and an intra prediction parameter derivation unit 304.

The entropy decoder 301 performs entropy decoding on the coded data Te input from the outside and decodes individual codes (syntax elements). The entropy coding includes a scheme in which syntax elements are subjected to variable-length coding by using a context (probability model) that is adaptively selected according to a type of the syntax elements and a surrounding condition, and a scheme in which syntax elements are subjected to variable-length coding by using a table or a calculation expression that is determined in advance. The former Context Adaptive Binary Arithmetic Coding (CABAC) stores in memory a CABAC state of the context (the type of a dominant symbol (0 or 1) and a probability state index pStateIdx indicating a probability). The entropy decoder 301 initializes all CABAC states at the beginning of a segment (tile, CTU row, or slice). The entropy decoder 301 transforms the syntax element into a binary string (Bin String) and decodes each bit of the Bin String. In a case that the context is used, a context index ctxInc is derived for each bit of the syntax element, the bit is decoded using the context, and the CABAC state of the context used is updated. Bits that do not use the context are decoded at an equal probability (EP, bypass), and the ctxInc derivation and the CABAC state are omitted. The decoded syntax element includes prediction information for generating a prediction image, a prediction error for generating a difference image, and the like.

The entropy decoder 301 outputs the decoded codes to the parameter decoder 302. Which code is to be decoded is controlled based on an indication of the parameter decoder 302.

Basic Flow

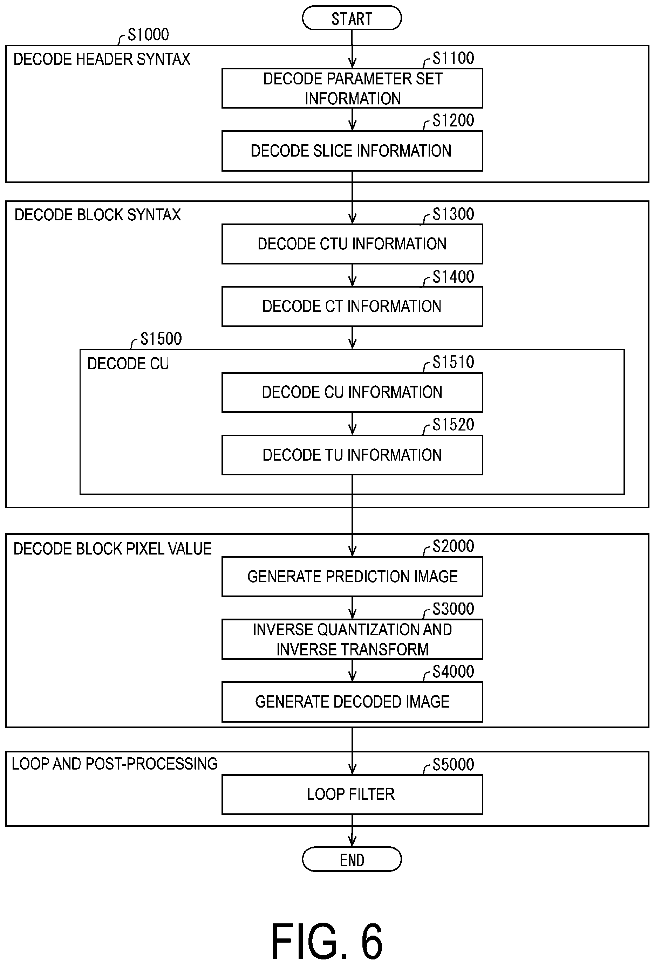

FIG. 6 is a flowchart illustrating general operation of the image decoding apparatus 31.

(S1100: Decoding of parameter set information) The header decoder 3020 decodes parameter set information such as the VPS, the SPS, and the PPS from coded data.

(S1200: Decoding of slice information) The header decoder 3020 decodes a slice header (slice information) from the coded data.

Afterwards, the image decoding apparatus 31 repeats the processing from S1300 to S5000 for each CTU included in the target picture, and thereby derives a decoded image of each CTU.

(S1300: Decoding of CTU information) The CT information decoder 3021 decodes the CTU from the coded data.

(S1400: Decoding of CT information) The CT information decoder 3021 decodes the CT from the coded data.

(S1500: Decoding of CU) The CU decoder 3022 performs S1510 and S1520 to thereby decode the CU from the coded data.

(S1510: Decoding of CU information) The CU decoder 3022 decodes CU information, prediction information, and the like from the coded data.

(S1520: Decoding of TU information) In a case that a prediction error is included in the TU, the TU decoder 3024 decodes QP update information and a quantization prediction error from the coded data. Note that the QP update information is a difference value from a quantization parameter prediction value qPpred, which is a prediction value of a quantization parameter QP.

(S2000: Generation of prediction image) The prediction image generation unit 308 generates a prediction image, based on the prediction information, for each block included in the target CU.

(S3000: Inverse quantization and inverse transform) The inverse quantization and inverse transform processing unit 311 performs inverse quantization and inverse transform processing on each TU included in the target CU.

(S4000: Generation of decoded image) The addition unit 312 generates a decoded image of the target CU by adding the prediction image supplied by the prediction image generation unit 308 and the prediction error supplied by the inverse quantization and inverse transform processing unit 311.

(S5000: Loop filter) The loop filter 305 generates a decoded image by applying a loop filter such as a deblocking filter, an SAO, and an ALF to the decoded image.

Configuration of Inter Prediction Parameter Derivation Unit

The loop filter 305 is a filter provided in the coding loop, and is a filter that removes block distortion and ringing distortion and improves image quality. The loop filter 305 applies a filter such as a deblocking filter, a sample adaptive offset (SAO), and an adaptive loop filter (ALF) on the decoded image of the CU generated by the addition unit 312.

The reference picture memory 306 stores a decoded image of the CU in a predetermined position for each target picture and target CU.

The prediction parameter memory 307 stores the prediction parameter in a predetermined position for each CTU or CU.

Parameters derived by the prediction parameter derivation unit 320 are input to the prediction image generation unit 308. The prediction image generation unit 308 reads a reference picture from the reference picture memory 306. The prediction image generation unit 308 generates a prediction image of a block by using the parameters and the reference picture (reference picture block).

The inverse quantization and inverse transform processing unit 311 (residual decoder) performs inverse quantization and inverse transform on a quantization transform coefficient input from the parameter decoder 302 to calculate a transform coefficient. Neural Network Post-Filter Characteristics SEI

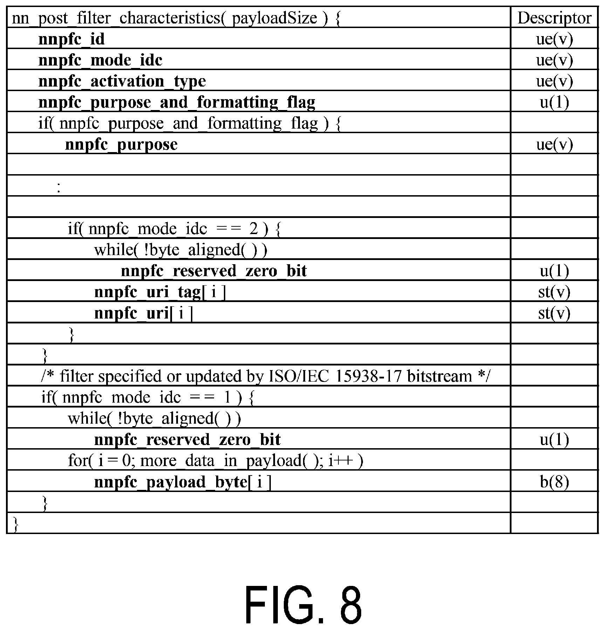

FIG. 8 illustrates syntax of a neural network post-filter characteristics SEI message nn_post_filter_characteristics (payloadSize) according to the present embodiment. payloadSize being an argument represents the number of bytes of the SEI message.

The SEI message is SEI applied to each Coded Video Sequence (CVS). Note that the CVS refers to a set of 0 or more access units (AUs) starting with a randomly accessible access unit such as Intra Random Access Pictures (IRAP) or Gradual Decoder Refresh Picture (GDR). The access unit includes pictures displayed at the same time. IRAP may be any one of Instantaneous Decoder Refresh (IDR), Clean Random Access (CRA), and Broken Link Access (BLA).

In the SEI message, the following variables are defined.

The width and the height of a decoded image are herein indicated by InpPicWidthInLumaSamples and InpPicHeightInLumaSamples, respectively, for each luma pixel.

InpPicWidthInLumaSamples is set equal to pps_pic_width_in_luma_samples-SubWidthC * (pps_conf_win_left_offset + pps_conf_win_right_offset).

InpPicHeightInLumaSamples is set equal to pps_pic_height_in_luma_samples-SubHeightC * (pps_conf_win_top_offset + pps_conf_win_bottom_offset).

The decoded image has two-dimensional array CroppedYPic[y][x] of a luma pixel and two-dimensional array CroppedCbPic[y][x] and CroppedCrPic[y][x] of a chroma pixel having a vertical coordinate y and a horizontal coordinate x. Here, the coordinate y of a top left corner of the pixel array is 0, and the coordinate x thereof is 0.

The decoded image has a luma pixel bit-depth BitDepthY. The decoded image has a chroma pixel bit-depth BitDepthC. Note that both of BitDepthY and BitDepthC are set equal to BitDepth.

A variable InpSubWidthC represents a chroma sub-sampling ratio for luma in the horizontal direction of the decoded image, and a variable InpSubHeightC represents a chroma sub-sampling ratio for luma in the vertical direction of the decoded image. Note that InpSubWidthC is set equal to the variable SubWidthC of coded data. InpSubHeightC is set equal to the variable SubHeightC of coded data.

A variable SliceQPY is set equal to the quantization parameter SliceQpY of coded data updated at a slice level.

nnpfc_id includes an identification number that can be used for identifying post-filtering processing. A value of nnpfc_id must be a value from 0 to 2 to the power of 32 - 2. The value of nnpfc_id from 256 to 511 or from 2 to the power of 31 to 2 to the power of 32 - 2 is preserved for future use. Accordingly, a decoder ignores the value of nnpfc_id from 256 to 511 or from 2 to the power of 31 to 2 to the power of 32 - 2.

nnpfc_mode_idc is a value indicating whether associated post-filtering processing is determined by an external means indicated in this specification. In a case that the value is 0, it is indicated that the associated post-filtering processing is determined by an external means not indicated in this specification. In a case that the value ofnnpfc_mode_idc is 1, it is indicated that the associated post-filtering processing is a neural network represented by the ISO/IEC 15938-17 bitstream included in the SEI message. In a case that the value of nnpfc_mode_idc is 2, it is indicated that the associated post-filtering processing is a neural network identified by an indicated tag Uniform Resource Identifier (URI) (nnpfc_uri_tag[i]) and neural network information URI (nnpfc_uri[i]).

The value of nnpfc_mode_idc must be a value from 0 to 255. The value of nnpfc_mode_idc greater than 2 is preserved for future indication, and thus must not be present in a bitstream conforming to the version of this specification. A decoder conforming to the version of this specification ignores the SEI message including such a preserved value of nnpfc_mode_idc.

As a problem of NPL 1, in order to perform the post-filtering processing using filter information defined in the neural network post-filter characteristics SEI message, the SEI needs to be transmitted for each picture by using neural network post-filter activation SEI to be described later, which presents a problem of redundancy in a case that the same post-filtering processing is performed in all of pictures.

In view of this, in the present embodiment, a syntax element defining an activation method is added to the neural network post-filter characteristics SEI message, with the aim that the post-filtering processing can be performed without using the neural network post-filter activation SEI message.

nnpfc_activation_type is a value indicating a type of activation of the post-filtering processing. In a case that a value of nnpfc_activation_type is 0, it is indicated that the neural network post-filter activation SEI message is used. In a case that the value of nnpfc_activation_type is 1, it is indicated that all of the pictures in the current CSV are activated, and filtering processing is performed using the current neural network post-filter characteristics SEI message.

The value of nnpfc_activation_type must be a value from 0 to 255. The value of nnpfc_activation_type greater than 1 is preserved for future indication, and thus must not be present in a bitstream conforming to the version of this specification. A decoder conforming to the version of this specification ignores the SEI message including such a preserved value of nnpfc_activation_type.

Such an embodiment allows the post-filtering processing to be activated for each CVS, and can solve the problem that there is redundancy in a case of performing the same post-filtering processing in all of the pictures.

nnpfc_purpose_and_formatting_flag is a flag indicating whether there are syntax elements related to the purpose of filtering, input formatting, output formatting, and complexity. In a case that a value of the flag is 1, it is indicated that there are syntax elements related to the purpose of filtering, input formatting, output formatting, and complexity. In a case that the value of the flag is 0, it is indicated that there are not syntax elements related to the purpose of filtering, input formatting, output formatting, and complexity.

In a case that the value of nnpfc_mode_idc is 1, and the Coded Layer Video Sequence (CLVS) does not include a preceding neural network post-filter characteristics SEI message having the same value of nnpfc_id as the value of nnpfc_id of the SEI message, the value of nnpfc_purpose_and_formatting_flag must be 1.

In a case that the CLVS includes a preceding neural network post-filter characteristics SEI message, in decoding order, having the same value of nnpfc_id as the value of nnpfc_id of the SEI message, at least one of the following conditions is applied.

- This SEI message has the value of nnpfc_mode_idc equal to 1 and the value of nnpfc_purpose_and_formatting_flag equal to 0 in order to provide a neural network update.
- This SEI message has the same content as the preceding neural network post-filter characteristics SEI message.

In a case that this SEI message is the first neural network post-filter characteristics SEI message, in decoding order, that has a specific nnpfc_id value within the current CLVS, this SEI message specifies a base post-filter associated with the current decoded image and all subsequent decoded images of the current layer, in output order until the end of the current CLVS.

In a case that this SEI message is not the first neural network post-filter characteristics SEI message, in decoding order, that has a specific nnpfc_id value within the current CLVS, this SEI message is associated with the current decoded image and all subsequent decoded images of the current layer in output order until the end of the current CLVS or the next neural network post-filter characteristics SEI message having the specific nnpfc_id value, in output order, within the current CLVS.

nnpfc_purpose indicates the purpose of the post-filtering processing. A value of nnpfc_purpose must be a value from 0 to 2 to the power of 32 - 2. The value of nnpfc_purpose greater than 4 is preserved for future specification, and thus must not be present in a bitstream conforming to the version of this specification. A decoder conforming to the version of this specification ignores the SEI message including such a preserved value of nnpfc_purpose.

In a case that the value of nnpfc_purpose is 0, it indicates unknown or undefined.

In a case that the value of nnpfc_purpose is 1, it is aimed to enhance image quality.

In a case that the value of nnpfc_purpose is 2, it indicates upsampling to the 4 : 2 : 2 chroma format or the 4 : 4 : 4 chroma format, or upsampling from the 4 : 2 : 2 chroma format to the 4 : 4 : 4 chroma format.

In a case that the value of nnpfc_purpose is 3, the width or the height of an output image decoded without changing the chroma format is increased.

In a case that the value of nnpfc_purpose is 4, the width or the height of a decoded output image is increased, and the chroma format is upsampled.

Note that, in a case that the value of SubWidthC is 1 and the value of SubHeightC is 1, nnpfc_purpose must not be 2 nor 4.

In addition, in the above-described case that the value of nnpfc_mode_idc is 2, in order to obtain a unit of byte, bits having a value of 0 are inserted with nnpfc_reserved_zero_bit. Then, information of the neural network is coded and decoded from the indicated tag URI (nnpfc_uri_tag[i]) and neural network information URI (nnpfc_uri[i]), and the associated post-filtering processing is performed using these pieces of information.

In a case that the value of nnpfc_mode_idc is 1, in order to obtain a unit of byte, bits having a value of 0 are inserted with nnpfc_reserved_zero_bit, and then the information of the neural network is coded and decoded using the ISO/IEC 15938-17 bitstream nnpfc_payload_byte[i].

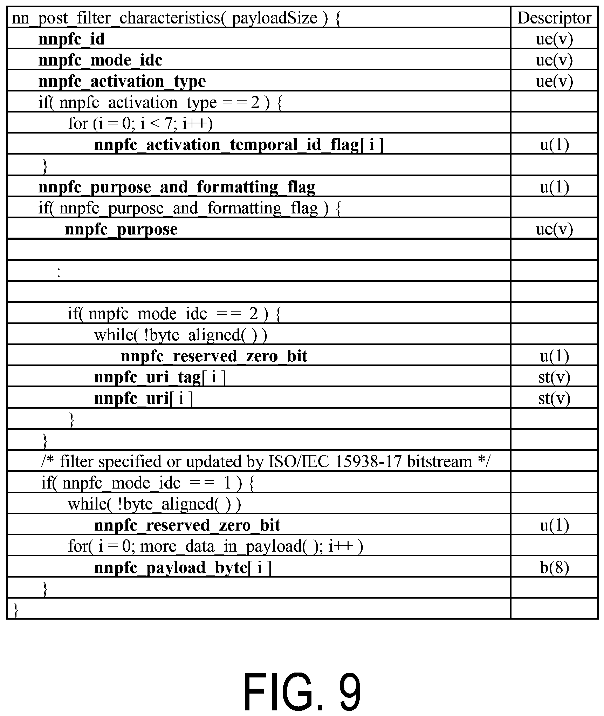

FIG. 9 is syntax of the neural network post-filter characteristics SEI message according to another embodiment of the present invention.

A difference from the embodiment described above lies in addition of nnpfc_activation_type. In the present embodiment, activation of a picture of a specific layer and Temporal ID is indicated.

nnpfc_activation_type is a value indicating a type of activation of the post-filtering processing. Cases that the value of nnpfc_activation_type is 0 and 1 are the same as those of the embodiment described above. In a case that the value of nnpfc_activation_type is 2, as illustrated in FIG. 9, nnpfc_activation_temporal_id_flag[i] is used. In a case that the value is 0, the post-filtering processing is not activated. In a case that the value is 1, the post-filtering processing is activated. nnpfc_activation_temporal_id_flag[i] is a flag as to whether to activate the post-filtering processing of a picture having a Temporal ID value of i.

As another aspect, in a case that the value of nnpfc_activation_type is 2, the layer value nuh_layer_id and the value of Temporal ID to be activated may be explicitly indicated with syntax elements, and the post-filtering processing of only a picture in the CVS may be activated.

As another aspect, in a case that the value of nnpfc_activation_type is 2, the post-filtering processing of a picture in the CVS indicated by the values of nuh_layer_id and Temporal ID may be activated without adding syntax elements. nuh_layer_id is a layer value indicated by a header of the NAL unit of the neural network post-filter activation SEI message. The value of Temporal ID is a value obtained by subtracting 1 from the syntax element nuh_temporal_id_plus1.

As another aspect, in a case that the value ofnnpfc_activation_type is 2, the post-filtering processing of all of the pictures in the CVS indicated by nuh_layer_id is activated without adding syntax elements. In a case that the value of nnpfc_activation_type is 3, the post-filtering processing of a picture in the CVS indicated by the values of nuh_layer_id and Temporal ID may be activated. nuh_layer_id is a layer value indicated by a header of the NAL unit of the neural network post-filter activation SEI message. The value of Temporal ID is a value obtained by subtracting 1 from the syntax element nuh_temporal_id_plus1.

Note that, regarding Temporal ID, as a method other than identifying a picture with the indicated value, a method of activating the post-filtering processing of a picture having Temporal ID of the indicated value or greater may be adopted.

Such an embodiment allows the post-filtering processing of only a picture of a specific layer and Temporal ID to be activated, and can solve the problem of redundancy. Neural Network Post-Filter Activation SEI

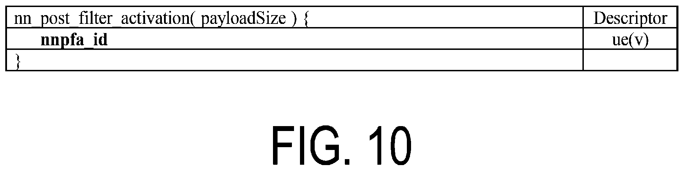

FIG. 10 is a diagram illustrating syntax of the neural network post-filter activation SEI message.

This SEI message indicates the neural network post-filtering processing that can be used for the post-filtering processing of the current decoded image. The neural network post-filter activation SEI message is applied only to the current decoded image.

For example, there may be cases that multiple neural network post-filter activation SEI messages are present for the same decoded image, such as a case that the post-filtering processing has a variety of purposes and a case that a variety of color components are subjected to the filtering processing.

A syntax element nnpfa_id indicates that the neural network post-filtering processing indicated by one or more pieces of neural network post-filter characteristics SEI that is associated with the current decoded image and have nnpfc_id equal to nnpfa_id can be used for the post-filtering processing of the current decoded image.

SEI Payload

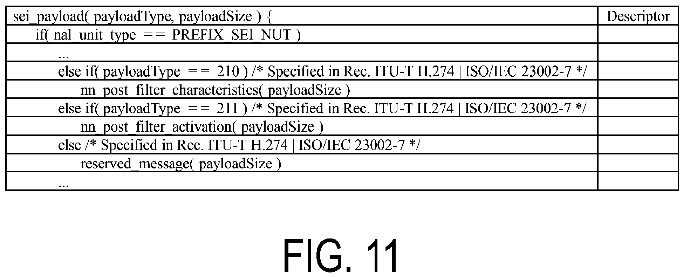

FIG. 11 is a diagram illustrating syntax of an SEI payload being a container of the SEI message according to NPL 1.
nal_unit_type is called in a case of PREFIX_SEI_NUT. PREFIX_SEI_NUT indicates that SEI is SEI located before slice data.

In a case that payloadType is 210, the neural network post-filter characteristics SEI are called.

In a case that payloadType is 211, the neural network post-filter activation SEI is called.

Decoding of SEI and Post-Filtering Processing

The header decoder 3020 reads the SEI payload being a container of the SEI message, and decodes the neural network post-filter characteristics SEI message. For example, the header decoder 3020 decodes nnpfc_id, nnpfc_mode_idc, nnpfc_activation_type, nnpfc_purpose_and_formatting_flag, nnpfc_purpose, nnpfc_reserved_zero_bit, nnpfc_uri_tag[i], nnpfc_uri[i], nnpfc_reserved_zero_bit, and nnpfc_payload_byte[i].

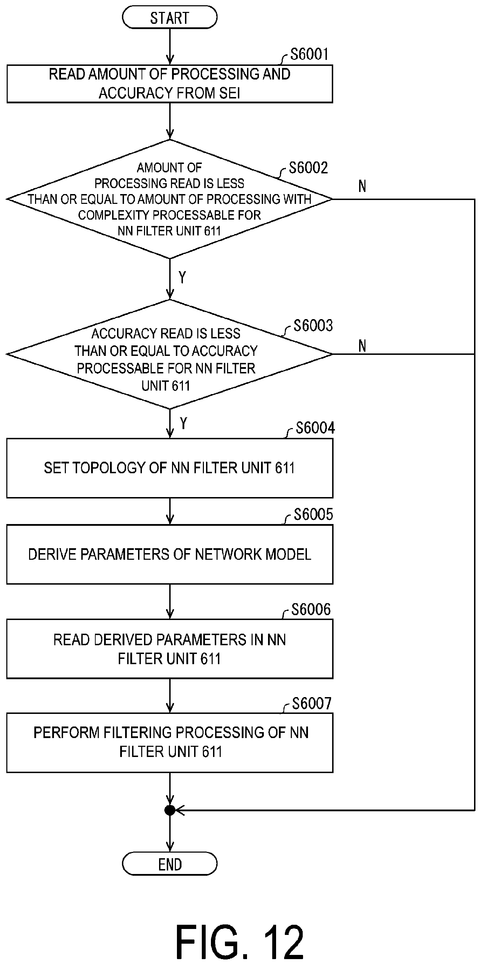

FIG. 12 is a diagram illustrating a flowchart of processing of the NN filter unit 611. The NN filter unit 611 performs the following processing in accordance with parameters of the SEI message:

S6001: read the amount of processing and accuracy from a neural network complexity element;
S6002: end in a case that the amount of processing read in S6001 exceeds the amount of processing with complexity processable for the NN filter unit 611, otherwise proceed to S6003;
S6003: end in a case that the accuracy read in S6001 exceeds the accuracy processable for the NN filter unit 611, otherwise proceed to S6004;
S6004: identify a network model from the SEI, and set topology of the NN filter unit 611;
S6005: derive the parameters of the network model from update information of the SEI;
S6006: read the derived parameters of the network model in the NN filter unit 611;
S6007: perform filtering processing of the NN filter unit 611, and output to the outside.

Note that the SEI is not necessarily required for construction of a luma sample and a chroma sample in decoding processing.

Configuration Example of NN Filter Unit 611

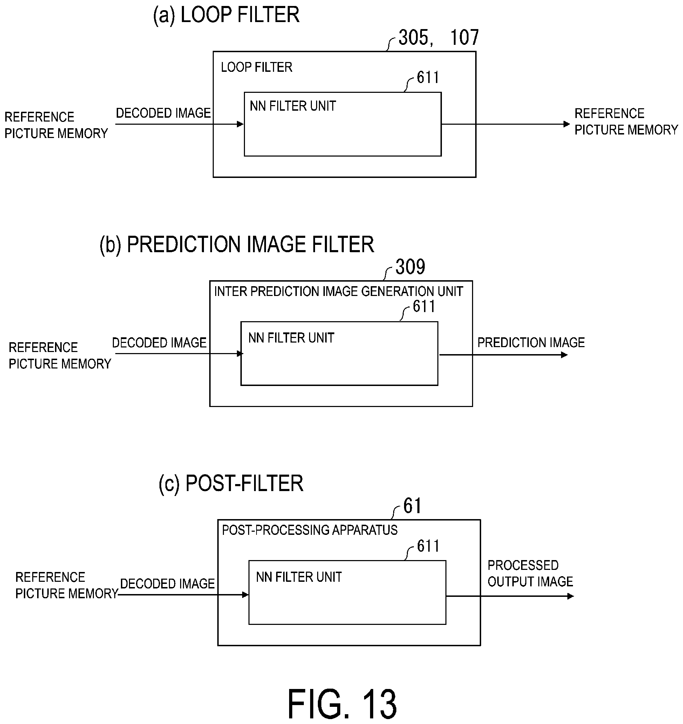

FIG. 13 is a diagram illustrating configuration examples of an interpolation (prediction image) filter, a loop filter, and a post-filter using a neural network filter unit (NN filter unit 611). Although the following description will take an example of the post-filter, the interpolation filter or the loop filter may be used.

The post-processing unit (resolution inverse convert apparatus) 61 after the video decoding apparatus includes the NN filter unit 611. In a case of outputting an image in the reference picture memory 306, the NN filter unit 611 performs the filtering processing and outputs the image to the outside. The NN filter unit 611 may perform displaying, file writing, re-encoding (transcoding), transmission, and the like for the output image. The NN filter unit 611 is a means for performing the filtering processing by the neural network model on the input image. Simultaneously, the NN filter unit 611 may reduce or enlarge the size to an actual size or to a size of a multiple of a rational number.

Here, the neural network model (hereinafter, NN model) signifies elements and a connection relationship (topology) of the neural network and parameters (weight and bias) of the neural network. Note that only the parameters of the neural network model may be switched with the topology being fixed.

Details of NN Filter Unit 611

The NN filter unit performs the filtering processing by the neural network model, using an input image inputTensor and input parameters (for example, QP, bS, and the like). The input image may be an image for each component, or may be an image having multiple components as channels. The input parameters may be assigned to a different channel from the image.

The NN filter unit may repeatedly apply the following processing.

The NN filter unit performs convolution operation (conv, convolution) of a kernel k[m][i][j] on inputTensor, and derives an output image outputTensor to which bias is added. Here, nn = 0.. n - 1, xx = 0.. width - 1, and yy = 0 .. height - 1, and $\Sigma$ represents the sum for each of mm, i, and j.

$$\text{outputTensor}[nn][xx][yy] = \Sigma\Sigma\Sigma(k[mm][i][j] * \text{inputTensor}[mm][xx + i - of][yy + j - of] + \text{bias}[nn])$$

In a case of 1 x 1 Conv, $\Sigma$ represents the sum for each of mm = 0 .. m - 1, i = 0, and j = 0. In this case, of = 0 is set. In a case of 3 x 3 Conv, $\Sigma$ represents the sum for each of mm = 0 .. m - 1, i = 0 .. 2, and j = 0 .. 2. In this case, of = 1 is set. n represents the number of channels of outSamples, m represents the number of channels of inputTensor, width represents the width of inputTensor and outputTensor, and height represents the height of inputTensor and outputTensor. of represents the size of a padding area provided around inputTensor in order to make inputTensor and outputTensor have the same size. In the following, in a case that output of the NN filter unit is a value (correction value) instead of an image, corrNN is used to represent output instead of outputTensor.

Note that, in a case of description using inputTensor and outputTensor of the CHW format instead of inputTensor and outputTensor of the CWH format, it is equivalent to the following processing.

$$\text{outputTensor}[nn][yy][xx] = \Sigma\Sigma\Sigma(k[mm][i][j] * \text{inputTensor}[mm][yy + j - of][xx + i - of] + \text{bias}[nn])$$

Processing shown by the following expression referred to as Depth wise Conv may be performed. Here, nn = 0 .. n - 1, xx = 0 .. width - 1, and yy = 0 .. height - 1, and $\Sigma$ represents the sum for each of i and j. n represents the number of channels of outputTensor and inputTensor, width represents the width of inputTensor and outputTensor, and height represents the height of inputTensor and outputTensor.

$$\text{outputTensor}[nn][xx][yy] = \Sigma\Sigma(k[nn][i][j] * \text{inputTensor}[nn][xx + i - of][yy + j - of] + \text{bias}[nn])$$

Non-linear processing referred to as Activate, such as ReLU, may be used.

$$\text{ReLU}(x) = x >= 0 \ ? \ x : 0$$

leakyReLU shown in the following expression may be used.

$$\mathrm{leakyReLU(x) = x >= 0 \ ? \ x : a * x \ : \ *}$$

Here, a is a prescribed value, for example, 0.1 or 0.125. In order to perform integer arithmetic, all of the above values of k, bias, and a may be integers, and right shifting may be performed after conv.

In ReLU, for values less than 0, 0 is invariably output, and for values equal to or greater than 0, an input value is directly output. In contrast, in leakyReLU, for values less than 0, linear processing is performed with a gradient being set equal to a. In ReLU, the gradient for values less than 0 disappears, and hence learning may not advance steadily. In leakyReLU, the gradient for values less than 0 remains, and thus the above problem is less easily caused. Of above leakyReLU(x), PReLU using a parameterized value of a may be used.

NNR

Neural Network Coding and Representation (NNR) is international standard ISO/IEC 15938-17 for efficiently compressing a neural network (NN). Compressing a learned NN enables to enhance efficiency in storing and transmitting the NN.

In the following, an overview of coding and decoding processing of NNR will be described.

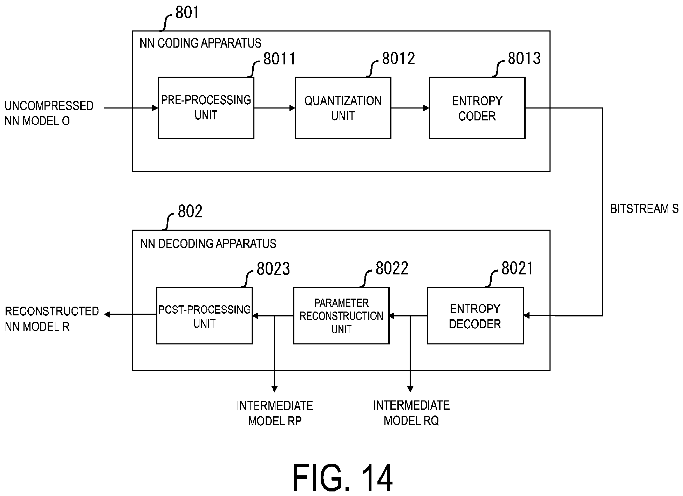

FIG. 14 is a diagram illustrating a coding apparatus and a decoding apparatus of NNR.

An NN coding apparatus 801 includes a pre-processing unit 8011, a quantization unit 8012, and an entropy coder 8013. The NN coding apparatus 801 inputs an uncompressed NN model O, performs quantization of the NN model O in the quantization unit 8012, and derives a quantized model Q. Before the quantization, the NN coding apparatus 801 may repeatedly apply parameter reduction methods in the pre-processing unit 8011, such as pruning and sparse representation. Subsequently, in the entropy coder 8013, entropy coding is applied to the quantized model Q, and a bitstream S for storing and transmitting the NN model is derived.

An NN decoding apparatus 802 includes an entropy decoder 8021, a parameter reconstruction unit 8022, and a post-processing unit 8023. The NN decoding apparatus 802 first inputs the transmitted bitstream S, and in the entropy decoder 8021, performs entropy decoding of S and derives an intermediate model RQ. In a case that an operating environment of the NN model supports inference using a quantization representation used in RQ, RQ may be output and used for the inference. Otherwise, parameters of RQ are reconstructed to the original representation in the parameter reconstruction unit 8022, and an intermediate model RP is derived. In a case that a sparse tensor representation to be used can be processed in the operating environment of the NN model, RP may be output and used for the inference. Otherwise, a tensor different from the NN model O or a reconstructed NN model R not including a structural representation is derived and output.

In the NNR standard, there are decoding schemes for numerical representation of specific NN parameters, such as integers and floating points.

With a decoding scheme NNR_PT_INT, a model including a parameter of an integer value is decoded. With a decoding scheme NNR_PT_FLOAT, NNR_PT_INT is enhanced, and a quantization step size delta is added. delta is multiplied by the integer value, and a scaled integer is thereby generated. delta is derived as follows, using a quantization parameter qp of an integer and a granularity parameter qp_density of delta.

$$\mathrm{mul = 2 \ ^\wedge \ (qp\_density) + (qp \ \& \ (2 \ ^\wedge \ (qp\_density) - 1))}$$

$$\mathrm{delta = mul * 2 \ ^\wedge \ ((qp >> qp\_density) - qp\_density)}$$

Format of Learned NN

Representation of a learned NN is made up of two elements, i.e., topology representation such as the size of each layer and connection between the layers and parameter representation such as the weight and the bias.

The topology representation is covered by native formats such as Tensorflow and PyTorch; however, for the sake of enhancement of interoperability, there are exchange formats such as an Open Neural Network Exchange Format (ONNX) and a Neural Network Exchange Format (NNEF).

In the NNR standard, topology information nnr_topology_unit_payload is transmitted as a part of an NNR bitstream including a compressed parameter tensor. This allows for implementation of interoperation with topology information represented not only in an exchange format but also in a native format.

Configuration of Image Coding Apparatus

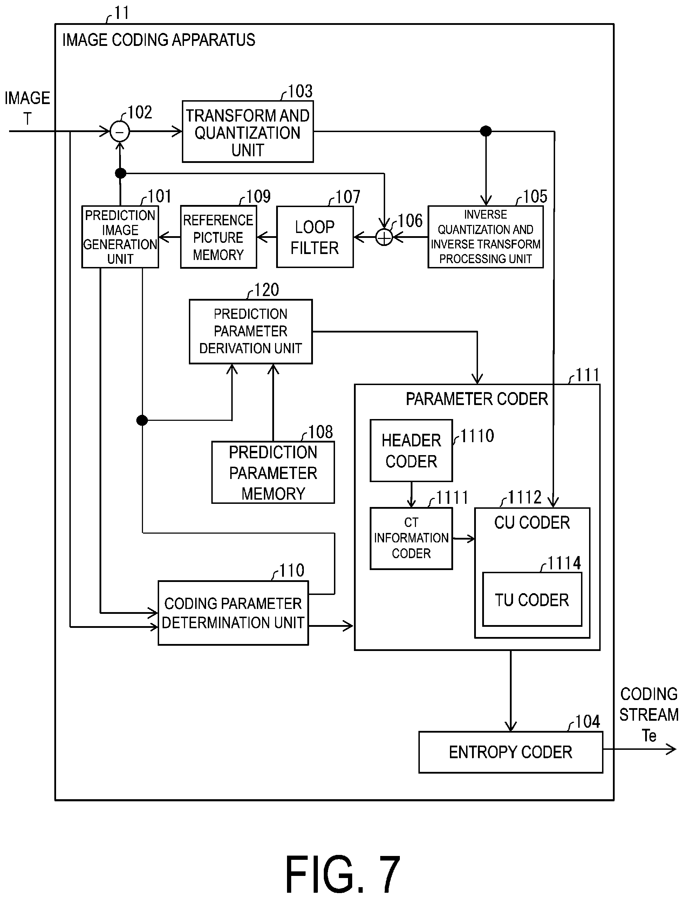

Next, a configuration of the image coding apparatus 11 according to the present embodiment will be described. FIG. 7 is a block diagram illustrating a configuration of the image coding apparatus 11 according to the present embodiment. The image coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit, a frame memory) 108, a reference picture memory (a reference image storage unit, a frame memory) 109, a coding parameter determination unit 110, a parameter coder 111, a prediction parameter derivation unit 120, and an entropy coder 104.

The prediction image generation unit 101 generates a prediction image for each CU.

The subtraction unit 102 subtracts a pixel value of the prediction image of a block input from the prediction image generation unit 101 from a pixel value of the image T to generate a prediction error. The subtraction unit 102 outputs the prediction error to the transform and quantization unit 103.

The transform and quantization unit 103 performs a frequency transform on the prediction error input from the subtraction unit 102 to calculate a transform coefficient, and derives a quantization transform coefficient by quantization. The transform and quantization unit 103 outputs the quantization transform coefficient to the parameter coder 111 and the inverse quantization and inverse transform processing unit 105.

The inverse quantization and inverse transform processing unit 105 is the same as the inverse quantization and inverse transform processing unit 311 (FIG. 5) in the image decoding apparatus 31, and descriptions thereof are omitted. The calculated prediction error is output to the addition unit 106.

The parameter coder 111 includes a header coder 1110, a CT information coder 1111, and a CU coder 1112 (prediction mode coder). The CU coder 1112 further includes a TU coder 1114. General operation of each module will be described below.

The header coder 1110 performs coding processing of parameters such as header information, split information, prediction information, and quantization transform coefficients.

The CT information coder 1111 codes QT and MT (BT, TT) split information and the like.

The CU coder 1112 codes the CU information, the prediction information, the split information, and the like.

In a case that a prediction error is included in the TU, the TU coder 1114 codes the QP update information and the quantization prediction error.

The CT information coder 1111 and the CU coder 1112 supply syntax elements such as the inter prediction parameter and the quantization transform coefficients to the parameter coder 111.

The parameter coder 111 inputs the quantization transform coefficients and the coding parameters to the entropy coder 104. The entropy coder 104 performs entropy coding on these to generate the coded data Te, and outputs the generated coded data Te.

The prediction parameter derivation unit 120 derives the inter prediction parameter and the intra prediction parameter from the parameters input from the coding parameter determination unit 110. The inter prediction parameter and intra prediction parameter derived are output to the parameter coder 111.

The addition unit 106 adds the pixel value for the prediction block input from the prediction image generation unit 101 and the prediction error input from the inverse quantization and inverse transform processing unit 105 together for each pixel and generates a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may have a configuration of only the deblocking filter, for example.

The prediction parameter memory 108 stores the prediction parameters generated by the coding parameter determination unit 110 for each target picture and CU at a predetermined position.

The reference picture memory 109 stores the decoded image generated by the loop filter 107 for each target picture and CU at a predetermined position.

The coding parameter determination unit 110 selects one set among multiple sets of coding parameters. The coding parameters include the above-described QT, BT, or TT split information, prediction parameters, or parameters to be coded which are generated in relation thereto. The prediction image generation unit 101 generates the prediction image by using these coding parameters.

Note that a computer may be used to implement some of the image coding apparatus 11 and the image decoding apparatus 31 in the above-described embodiments, for example, the entropy decoder 301, the parameter decoder 302, the loop filter 305, the prediction image generation unit 308, the inverse quantization and inverse transform processing unit 311, the addition unit 312, the prediction parameter derivation unit 320, the prediction image generation unit 101, the subtraction unit 102, the transform and quantization unit 103, the entropy coder 104, the inverse quantization and inverse transform processing unit 105, the loop filter 107, the coding parameter determination unit 110, the parameter coder 111, and the prediction parameter derivation unit 120. In that case, this configuration may be realized by recording a program for realizing such control functions on a computer-readable recording medium and causing a computer system to read and perform the program recorded on the recording medium. Note that the "computer system" mentioned here refers to a computer system built into either the image coding apparatus 11 or the image decoding apparatus 31 and is assumed to include an OS and hardware components such as a peripheral apparatus. The "computer-readable recording medium" refers to a portable medium such as a flexible disk, a magneto-optical disk, a ROM, and a CD-ROM, and a storage device such as a hard disk built into the computer system. Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a fixed period of time, such as a volatile memory included in the computer system functioning as a server or a client in such a case. The above-described program may be one for realizing some of the above-described functions, and also may be one capable of realizing the above-described functions in combination with a program already recorded in the computer system.

Part or all of the image coding apparatus 11 and the image decoding apparatus 31 in the embodiments described above may be realized as an integrated circuit such as a Large Scale Integration (LSI). Each function block of the image coding apparatus 11 and the image decoding apparatus 31 may be individually realized as processors, or part or all thereof may be integrated into processors. The circuit integration technique is not limited to LSI, and a dedicated circuit or a multi-purpose processor may be used for realization. In a case that, with advances in semiconductor technology, a circuit integration technology with which an LSI is replaced appears, an integrated circuit based on the technology may be used.

The embodiment of the present invention has been described in detail above referring to the drawings, but the specific configuration is not limited to the above embodiment and various amendments and the like can be made to a design that fall within the scope that does not depart from the gist of the present invention.

To describe the present embodiment with reference to FIG. 1, a video decoding apparatus includes an image decoding apparatus configured to decode coded data and generate a decoded image, an inverse conversion information decoding apparatus configured to decode inverse conversion information as supplemental enhancement information on a per sequence basis, and a resolution inverse conversion apparatus configured to conversion the decoded image to an image with an indicated resolution by using the inverse conversion information, the resolution inverse conversion apparatus using a neural network. The video decoding apparatus decodes information as to whether to apply resolution inverse conversion processing using the inverse conversion information on a per sequence basis or on a per picture basis.

A video decoding apparatus includes an image decoding apparatus configured to decode coded data and generate a decoded image, an inverse conversion information decoding apparatus configured to decode inverse conversion information as supplemental enhancement information on a per sequence basis, and a resolution inverse conversion apparatus configured to conversion the decoded image to an image with an indicated resolution by using the inverse conversion information, the resolution inverse conversion apparatus using a neural network. The video decoding apparatus decodes information as to whether to apply resolution inverse conversion processing using the inverse conversion information on a per layer basis.

A video coding apparatus includes an image coding apparatus configured to code an image and generate coded data, an inverse conversion information generation apparatus configured to generate inverse conversion information for inversely converting resolution of a decoded image resulting from decoding the coded data, and an inverse conversion information coding apparatus configured to code the inverse conversion information as supplemental enhancement information on a per sequence basis. The video coding apparatus codes information as to whether to apply resolution inverse conversion processing using the inverse conversion information on a per sequence basis or on a per picture basis.

A video coding apparatus includes an image coding apparatus configured to code an image and generate coded data, an inverse conversion information generation apparatus configured to generate inverse conversion information for inversely converting resolution of a decoded image resulting from decoding the coded data, and an inverse conversion information coding apparatus configured to code the inverse conversion information as supplemental enhancement information on a per sequence basis. The video coding apparatus codes information as to whether to apply resolution inverse conversion processing using the inverse conversion information on a per layer basis.

The embodiment of the present invention is not limited to the above-described embodiment, and various modifications are possible within the scope of the claims. That is, an embodiment obtained by combining technical means modified appropriately within the scope of the claims is also included in the technical scope of the present invention.

Industrial Applicability

The embodiment of the present invention can be preferably applied to a video decoding apparatus that decodes coded data in which image data is coded, and a video coding apparatus that generates coded data in which image data is coded. The embodiment of the present invention can be preferably applied to a data structure of coded data generated by the video coding apparatus and referred to by the video decoding apparatus.

Reference Signs List

1 Video transmission system
30 Video decoding apparatus
31 Image decoding apparatus
301 Entropy decoder
302 Parameter decoder
305, 107 Loop filter
306, 109 Reference picture memory
307, 108 Prediction parameter memory
308, 101 Prediction image generation unit
311, 105 Inverse quantization and inverse transform processing unit
312, 106 Addition unit
320 Prediction parameter derivation unit
10 Video coding apparatus
11 Image coding apparatus
102 Subtraction unit
103 Transform and quantization unit
104 Entropy coder
110 Coding parameter determination unit
111 Parameter coder
120 Prediction parameter derivation unit
71 Inverse conversion information generation apparatus
81 Inverse conversion information coding apparatus
91 Inverse conversion information decoding apparatus
611 NN filter unit

**Claims**

1.  A video decoding apparatus comprising:

    an image decoding apparatus configured to decode coded data and generate a decoded image;
    an inverse conversion information decoding apparatus configured to decode inverse conversion information as supplemental enhancement information on a per sequence basis; and
    a resolution inverse conversion apparatus configured to conversion the decoded image to an image with an indicated resolution by using the inverse conversion information, the resolution inverse conversion apparatus using a neural network, wherein
    the video decoding apparatus decodes information as to whether to apply resolution inverse conversion processing using the inverse conversion information on a per sequence basis or on a per picture basis.

2.  A video decoding apparatus comprising:

    an image decoding apparatus configured to decode coded data and generate a decoded image;
    an inverse conversion information decoding apparatus configured to decode inverse conversion information as supplemental enhancement information on a per sequence basis; and
    a resolution inverse conversion apparatus configured to conversion the decoded image to an image with an indicated resolution by using the inverse conversion information, the resolution inverse conversion apparatus using a neural network, wherein
    the video decoding apparatus decodes information as to whether to apply resolution inverse conversion processing using the inverse conversion information on a per layer basis.

3.  A video coding apparatus comprising:

an image coding apparatus configured to code an image and generate coded data;
an inverse conversion information generation apparatus configured to generate inverse conversion information for inversely converting resolution of a decoded image resulting from decoding the coded data; and
an inverse conversion information coding apparatus configured to code the inverse conversion information as supplemental enhancement information on a per sequence basis, wherein
the video coding apparatus codes information as to whether to apply resolution inverse conversion processing using the inverse conversion information on a per sequence basis or on a per picture basis.

4. A video coding apparatus comprising:

an image coding apparatus configured to code an image and generate coded data;
an inverse conversion information generation apparatus configured to generate inverse conversion information for inversely converting resolution of a decoded image resulting from decoding the coded data; and
an inverse conversion information coding apparatus configured to code the inverse conversion information as supplemental enhancement information on a per sequence basis, wherein
the video coding apparatus codes information as to whether to apply resolution inverse conversion processing using the inverse conversion information on a per layer basis.

FIG. 1

EP 4 346 213 A1

FIG. 2

HIGH-RESOLUTION PICTURE          LOW-RESOLUTION PICTURE     HIGH-RESOLUTION PICTURE

TIME t

FIG. 3

Tid          CurPic

2

1

0

TIME (POC) ──────────────────────────────►

        0         1         2         3         4

REFERENCE PICTURE LIST OF CurPic (= B3)

                                    refIdxL0

refIdxLX        0      1      2      3      4

L0 LIST
RefPicListL0    I0     B2     P1

L1 LIST
RefPicListL1    B2     P1     I0

             refIdxL1

# FIG. 4

FIG. 5

START

┌─ S1000
DECODE HEADER SYNTAX

┌─ S1100
DECODE PARAMETER SET
INFORMATION

┌─ S1200
DECODE SLICE INFORMATION

┌─ S1300
DECODE BLOCK SYNTAX

DECODE CTU INFORMATION

┌─ S1400
DECODE CT INFORMATION

┌─ S1500
DECODE CU

┌─ S1510
DECODE CU INFORMATION

┌─ S1520
DECODE TU INFORMATION

DECODE BLOCK PIXEL VALUE

┌─ S2000
GENERATE PREDICTION IMAGE

┌─ S3000
INVERSE QUANTIZATION AND
INVERSE TRANSFORM

┌─ S4000
GENERATE DECODED IMAGE

LOOP AND POST-PROCESSING

┌─ S5000
LOOP FILTER

END

# FIG. 6

FIG. 7

| nn_post_filter_characteristics( payloadSize ) { | Descriptor |
|---|---|
| nnpfc_id | ue(v) |
| nnpfc_mode_idc | ue(v) |
| nnpfc_activation_type | ue(v) |
| nnpfc_purpose_and_formatting_flag | u(1) |
| if( nnpfc_purpose_and_formatting_flag ) { | |
| nnpfc_purpose | ue(v) |
| | |
| : | |
| | |
| if( nnpfc_mode_idc == 2 ) { | |
| while( !byte_aligned( ) ) | |
| nnpfc_reserved_zero_bit | u(1) |
| nnpfc_uri_tag[ i ] | st(v) |
| nnpfc_uri[ i ] | st(v) |
| } | |
| } | |
| /* filter specified or updated by ISO/IEC 15938-17 bitstream */ | |
| if( nnpfc_mode_idc == 1 ) { | |
| while( !byte_aligned( ) ) | |
| nnpfc_reserved_zero_bit | u(1) |
| for( i = 0; more_data_in_payload( ); i++ ) | |
| nnpfc_payload_byte[ i ] | b(8) |
| } | |
| } | |

# FIG. 8

| nn_post_filter_characteristics( payloadSize ) { | Descriptor |
|---|---|
| **nnpfc_id** | ue(v) |
| **nnpfc_mode_idc** | ue(v) |
| **nnpfc_activation_type** | ue(v) |
| if( nnpfc_activation_type = = 2 ) { | |
| for (i = 0; i < 7; i++) | |
| **nnpfc_activation_temporal_id_flag[ i ]** | u(1) |
| } | |
| **nnpfc_purpose_and_formatting_flag** | u(1) |
| if( nnpfc_purpose_and_formatting_flag ) { | |
| **nnpfc_purpose** | ue(v) |
| | |
| : | |
| | |
| if( nnpfc_mode_idc = = 2 ) { | |
| while( !byte_aligned( ) ) | |
| **nnpfc_reserved_zero_bit** | u(1) |
| **nnpfc_uri_tag[ i ]** | st(v) |
| **nnpfc_uri[ i ]** | st(v) |
| } | |
| } | |
| /* filter specified or updated by ISO/IEC 15938-17 bitstream */ | |
| if( nnpfc_mode_idc = = 1 ) { | |
| while( !byte_aligned( ) ) | |
| **nnpfc_reserved_zero_bit** | u(1) |
| for( i = 0; more_data_in_payload( ); i++ ) | |
| **nnpfc_payload_byte[ i ]** | b(8) |
| } | |
| } | |

# FIG. 9

| nn_post_filter_activation( payloadSize ) { | Descriptor |
|---|---|
| **nnpfa_id** | ue(v) |
| } | |

# FIG. 10

| sei_payload( payloadType, payloadSize ) { | Descriptor |
|---|---|
| if( nal_unit_type == PREFIX_SEI_NUT ) | |
| ... | |
| else if( payloadType == 210 ) /* Specified in Rec. ITU-T H.274 \| ISO/IEC 23002-7 */ | |
| nn_post_filter_characteristics( payloadSize ) | |
| else if( payloadType == 211 ) /* Specified in Rec. ITU-T H.274 \| ISO/IEC 23002-7 */ | |
| nn_post_filter_activation( payloadSize ) | |
| else /* Specified in Rec. ITU-T H.274 \| ISO/IEC 23002-7 */ | |
| reserved_message( payloadSize ) | |
| ... | |

# FIG. 11

START

S6001
READ AMOUNT OF PROCESSING AND
ACCURACY FROM SEI

S6002
AMOUNT OF
PROCESSING READ IS LESS
THAN OR EQUAL TO AMOUNT OF PROCESSING WITH
COMPLEXITY PROCESSABLE FOR
NN FILTER UNIT 611

N

Y

S6003
ACCURACY READ IS LESS
THAN OR EQUAL TO ACCURACY
PROCESSABLE FOR NN FILTER
UNIT 611

N

Y

S6004
SET TOPOLOGY OF NN FILTER UNIT 611

S6005
DERIVE PARAMETERS OF NETWORK MODEL

S6006
READ DERIVED PARAMETERS IN NN
FILTER UNIT 611

S6007
PERFORM FILTERING PROCESSING OF NN
FILTER UNIT 611

END

# FIG. 12

## (a) LOOP FILTER

*305, 107*

LOOP FILTER

*611*

NN FILTER UNIT

REFERENCE PICTURE MEMORY —DECODED IMAGE→ REFERENCE PICTURE MEMORY

## (b) PREDICTION IMAGE FILTER

*309*

INTER PREDICTION IMAGE GENERATION UNIT

*611*

NN FILTER UNIT

REFERENCE PICTURE MEMORY —DECODED IMAGE→ PREDICTION IMAGE

## (c) POST-FILTER

*61*

POST-PROCESSING APPARATUS

*611*

NN FILTER UNIT

REFERENCE PICTURE MEMORY—DECODED IMAGE→ PROCESSED OUTPUT IMAGE

# FIG. 13

801

NN CODING APPARATUS

8011

PRE-PROCESSING UNIT

8012

QUANTIZATION UNIT

8013

ENTROPY CODER

UNCOMPRESSED NN MODEL O

802

NN DECODING APPARATUS

8023

POST-PROCESSING UNIT

8022

PARAMETER RECONSTRUCTION UNIT

8021

ENTROPY DECODER

RECONSTRUCTED NN MODEL R

BITSTREAM S

INTERMEDIATE MODEL RP

INTERMEDIATE MODEL RQ

# FIG. 14

# EP 4 346 213 A1

Europäisches Patentamt

European Patent Office

Office européen des brevets

## EUROPEAN SEARCH REPORT

**Application Number**

EP 23 15 0460

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 096879 A (SHARP KK) 30 June 2022 (2022-06-30) * paragraph [0205] - paragraph [0215] * * paragraph [0073] * * figures 1, 4, 5, 14-19 * ----- | 1-4 | INV. H04N19/59 H04N19/70 H04N19/117 H04N19/186 |
| X | CHUJOH T ET AL: "AHG9/AHG11: Neural network based super resolution SEI", 20. JVET MEETING; 20201007 - 20201016; TELECONFERENCE; (THE JOINT VIDEO EXPLORATION TEAM OF ISO/IEC JTC1/SC29/WG11 AND ITU-T SG.16 ), , no. JVET-T0092 8 October 2020 (2020-10-08), XP030293548, Retrieved from the Internet: URL:https://jvet-experts.org/doc_end_user/documents/20_Teleconference/wg11/JVET-T0092-v2.zip JVET-T0092-v2.docx [retrieved on 2020-10-08] * paragraph [0001] - paragraph [0002] * ----- -/-- | 1-4 | |

TECHNICAL FIELDS SEARCHED (IPC)

H04N

The present search report has been drawn up for all claims

| Place of search | Date of completion of the search | Examiner |
|---|---|---|
| Munich | 7 August 2023 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 15 0460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUJOH T ET AL: "AHG9/AHG11: Level information for super-resolution neural network", 21. JVET MEETING; 20210106 – 20210115; TELECONFERENCE; (THE JOINT VIDEO EXPLORATION TEAM OF ISO/IEC JTC1/SC29/WG11 AND ITU-T SG.16 ), , no. JVET-U0053 29 December 2020 (2020-12-29), XP030293097, Retrieved from the Internet: URL:https://jvet-experts.org/doc_end_user/ documents/21_Teleconference/wg11/JVET-U005 3-v1.zip JVET-U0053-v1.docx [retrieved on 2020-12-29] * paragraph [0001] – paragraph [0002] * ----- | 1-4 | |
| X | WO 2021/064413 A1 (V NOVA INT LTD [GB]) 8 April 2021 (2021-04-08) * page 58, line 13 – page 69, line 26 * ----- | 1-4 | TECHNICAL FIELDS SEARCHED (IPC) |
| X | MCCARTHY (DOLBY) S ET AL: "AHG9: Neural-network post filtering SEI message", 26. JVET MEETING; 20220420 – 20220429; TELECONFERENCE; (THE JOINT VIDEO EXPLORATION TEAM OF ISO/IEC JTC1/SC29/WG11 AND ITU-T SG.16 ), , no. JVET-Z0121 ; m59453 22 April 2022 (2022-04-22), XP030300974, Retrieved from the Internet: URL:https://jvet-experts.org/doc_end_user/ documents/26_Teleconference/wg11/JVET-Z012 1-v2.zip JVET-Z0121_v2.docx [retrieved on 2022-04-22] * paragraph [2.1.2.2]; table 1 * ----- -/-- | 1-4 | |

The present search report has been drawn up for all claims

| Place of search | Date of completion of the search | Examiner |
|---|---|---|
| Munich | 7 August 2023 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 15 0460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANNUKSELA (NOKIA) M M ET AL: "AHG9: On post-filter SEI", 22. JVET MEETING; 20210420 - 20210428; TELECONFERENCE; (THE JOINT VIDEO EXPLORATION TEAM OF ISO/IEC JTC1/SC29/WG11 AND ITU-T SG.16 ), , no. JVET-V0058 ; m56451 13 April 2021 (2021-04-13), XP030294069, Retrieved from the Internet: URL:https://jvet-experts.org/doc_end_user/ documents/22_Teleconference/wg11/JVET-V005 8-v1.zip JVET-V0058.docx [retrieved on 2021-04-13] * paragraph [0002] * ----- | 1-4 | |
| A | MCCARTHY S ET AL: "Additional SEI messages for VSEI (Draft 2)", 27. JVET MEETING; 20220713 - 20220722; TELECONFERENCE; (THE JOINT VIDEO EXPLORATION TEAM OF ISO/IEC JTC1/SC29/WG11 AND ITU-T SG.16 ), , no. JVET-AA2006 ; m60614 19 August 2022 (2022-08-19), XP030304218, Retrieved from the Internet: URL:https://jvet-experts.org/doc_end_user/ documents/27_Teleconference/wg11/JVET-AA20 06-v2.zip JVET-AA2006-v2.docx [retrieved on 2022-08-19] * the whole document * ----- | 1-4 | TECHNICAL FIELDS SEARCHED (IPC) |

The present search report has been drawn up for all claims

| Place of search | Date of completion of the search | Examiner |
|---|---|---|
| Munich | 7 August 2023 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 0460

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2023

| Patent document cited in search report | | | Publication date | Patent family member(s) | | Publication date |
|---|---|---|---|---|---|---|
| JP 2022096879 | A | | 30-06-2022 | NONE | | |
| WO 2021064413 | A1 | | 08-04-2021 | CN 114788283 | A | 22-07-2022 |
| | | | | CN 114930835 | A | 19-08-2022 |
| | | | | CN 115191116 | A | 14-10-2022 |
| | | | | EP 4038879 | A1 | 10-08-2022 |
| | | | | EP 4038883 | A1 | 10-08-2022 |
| | | | | EP 4042695 | A1 | 17-08-2022 |
| | | | | EP 4221221 | A1 | 02-08-2023 |
| | | | | GB 2603873 | A | 17-08-2022 |
| | | | | GB 2604292 | A | 31-08-2022 |
| | | | | GB 2605029 | A | 21-09-2022 |
| | | | | US 2022345753 | A1 | 27-10-2022 |
| | | | | US 2022385911 | A1 | 01-12-2022 |
| | | | | WO 2021064412 | A1 | 08-04-2021 |
| | | | | WO 2021064413 | A1 | 08-04-2021 |
| | | | | WO 2021064414 | A1 | 08-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. MCCARTHY ; T. CHUJOH ; M. M. HANNUKSELA ; G. J. SULLIVAN ; Y.-K.WANG.** Additional SEI messages for VSEI (Draft 1). *JVET-AA2006-v2,* 19 August 2022